# EUROPEAN PATENT SPECIFICATION

(11) **EP 2 365 016 B1**
(45) Date of publication and mention of the grant of the patent: **03.05.2017**
(21) Application number: 11157159.2
(22) Date of filing: 07.03.2011
(51) Int. Cl.: C08G 64/02, C08G 64/20, C08G 64/38, C08G 63/08, C08G 63/81, C08G 63/82

(54) **Polymer and method for producing the same**
Polymer und dessen Herstellungsverfahren
Polymère et son procédé de production

(30) Priority: 08.03.2010 JP 2010050939; 08.03.2010 JP 2010050985; 02.08.2010 JP 2010173296; 05.08.2010 JP 2010176518
(43) Date of publication of application: 14.09.2011
(73) Proprietor: Ricoh Company, Ltd., Tokyo 143-8555 (JP)
(72) Inventor: Nemoto, Taichi, Tokyo 143-8555 (JP); Mase, Nobuyuki, Hamamatsu-shi Shizuoka (JP); Sako, Takeshi, Hamamatsu-shi Shizuoka (JP); Okajima, Idzumi, Hamamatsu-shi Shizuoka (JP); Mori, Shunsuke, Hamamatsu-shi Shizuoka (JP); Tanaka, Chiaki, Tokyo 143-8555 (JP); Yamauchi, Yoshitaka, Tokyo 143-8555 (JP); Ishiduka, Jyun, Hamamatsu-shi Shizuoka (JP)
(74) Representative: Held, Stephan

(56) References cited:
- WO-A1-2013/018874
- WO-A1-2013/024834
- JP-A- 2009 001 614
- GANAPATHY, H. S.; HWANG, H. S.;JEONG, Y.T.;LEE, W-K.;LIM, K.T.: "Ring-opening polymerizationof L-Lactide in supercritical carbondioxide using PDMS based stabilizers", EUROPEAN POLYMER JOURNAL, [Online] vol. 43, no. 1, 28 November 2006 (2006-11-28), pages 119-126, XP002638867, DOI: 10.1016/j.eurpolymj.2006.10.009
- DATABASE CA [Online] CHEMICAL ABSTRACTS SERVICE, COLUMBUS, OHIO, US; 14 November 2005 (2005-11-14), ZHOU, XIANJUE ET AL: "Method for synthesizing polylactide with supercritical co2 fluid extraction", XP002638868, retrieved from STN Database accession no. 2005:1204747 -& CN 1 583 819 A (UNIV DONGHUA [CN]) 23 February 2005 (2005-02-23)
- LOHMEIJER, B.G.G. ET AL.: "Guanidine and Amindine Organocatalysts for Ring-opening Polymerization of Cyclic Esters", MACROMOLECULES, vol. 39, 11 November 2006 (2006-11-11), pages 8574-8583, XP002638869, DOI: 10.1021/ma0619381
- NEDERBERG, F.; CONNOR, E. F.; MÖLLER, M.; GLAUSER, T.; HEDRICK, J. L.: "New Pa<radigms for Organic Catalysts: The First Organocatalytic Living Polymerization", ANGEW. CHEM. INT. ED., vol. 40, no. 14, 10 July 2001 (2001-07-10) , pages 2712-2715, XP002638879,

## Description

### BACKGROUND OF THE INVENTION

### Field of the Invention

The present invention relates to a method for producing a polymer in a compressive fluid through polymerization of a ring-opening polymerizable monomer in the presence of an organic catalyst, and to a polymer obtained by this method.

### Description of the Related Art

Plastics derived from petroleum have been mass-produced to support our lives in various ways, since most of them are light, tough, excellent in durability, and can easily be molded into a desired shape. However, when released to the environment, these plastics accumulate without being readily degraded. Also, they emit a large amount of carbon dioxide during combustion, accelerating progress of global warming.

For protecting the global environment, the recent interest has focused on resins made of non-petroleum material or biodegradable resins which are degraded by, for example, microorganisms in the natural environment, and studies have recently been made on these resins worldwide. Most of the biodegradable resins currently studied have an aliphatic carboxylic acid ester unit, and thus are easily degraded by microorganisms. Meanwhile, such resins are poor in thermal stability, and decreased in molecular weight or deteriorated in color to a considerable extent at molding processes performed at high temperatures, such as melt spinning, injection molding and melt film formation.

Among biodegradable resins, polylactic acid is a plastic made of lactic acid or its lactide (cyclic diester) obtainable from natural products, and also excellent in heat resistance and well-balanced between color and mechanical strength.

One of the ring-opening polymerizable monomers known is a lactide which is a starting material for polylactic acid. Production of polylactic acid using a lactide as a starting material is generally performed as follows. Specifically, a metal catalyst (e.g., tin octylate) is added to a lactide of L- or D-lactic acids, followed by melt polymerization at about 200°C under atmospheric or reduced pressure in an inert gas atmosphere. This method can produce poly-L-lactic acid or poly-D-lactic acid having a relatively high molecular weight.

The metal catalyst, however, remains in the resultant polylactic acid without being subjected to treatments such as washing with an acid and metal removal. The remaining metal catalyst degrades heat resistance and safety of the polylactic acid. In addition, the polymerization at high temperatures requires a large amount of energy, which is problematic.

Also, in the polymerization system for polylactic acid, the polylactic acid and the lactide exist in equilibrium, and thus, the melt polymerization at about 200°C cannot produce polylactic acid without containing the residual lactide.

The lactide contained in the resultant polylactic acid and impurities such as decomposed matters of the polylactic acid cause generation of foreign matters during molding and degrade physical properties of the polylactic acid (glass transition temperature and melt viscosity), considerably deteriorating moldability and thermal stability thereof. Thus, in general, the lactide contained in the polylactic acid is removed in vacuum, or re-precipitation, extraction in hot water, and other treatments are performed (see Japanese Patent Application Laid-Open (JP-A) No. 2008-63420).

However, similar to the removal of the metal catalyst, these treatments involve an increased number of steps, an increased amount of energy, and cost elevation due to a drop in production yield. These problems arise in the production of polylactic acid but also the production of a polymer using, as a starting material, other ring-opening polymerizable monomers such as ε-caprolactone.

Meanwhile, attempts have been made to produce polylactic acid in the presence of a compound containing substantially no metal. For example, JP-A No. 2009-1619 discloses a method in which ring-opening polymerization of lactides is performed in methylene chloride (solvent) with an organic catalyst. This method can produce polylactic acid at high yield.

However, an additional step of removing the solvent to obtain polylactic acid is required, and this method still involves cost elevation and requires a large amount of energy to remove the solvent.

In order to solve this problem, some researchers have studied use of supercritical carbon dioxide as a solvent (see, for example, Ganapathy, H.S.; Hwang, H.S.; Jeong, Y. T.; LEE, W-T.; Lim, K. T. Eur Polym J. 2007, 43(1), 119-126.).

Emulsion polymerization, dispersion polymerization or suspension polymerization of a vinyl monomer is exemplified as a method for producing fine polymer particles from a monomer in supercritical carbon dioxide.

Polymerization and particle formation in supercritical carbon dioxide have the following advantages over polymerization in organic solvents, and thus are utilized as a method for producing fine polymer particles from various monomers. The obtained polymer particles are used for various applications such as electrophotographic developers, printing inks, building paints and cosmetics. Specifically, the advantages are as follows.
(1) Solvent removal and drying after polymerization can be simplified since a dry polymer can be obtained at one step.
(2) Treatment of waste solvent can be omitted since no waste liquid is formed.
(3) Highly toxic organic solvent is not needed.
(4) Residual unreacted monomer components and hazardous materials can be removed at a washing step.
(5) Used carbon dioxide can be recovered and recycled.

Regarding ring-opening polymerization of a lactide, there is reported only the case where a tin catalyst is used which has recently begun to come under regulatory control. Moreover, in this case, the reaction time is long; i.e., 24 hours or longer, and the conversion rate of lactide to polylactic acid is not satisfactory; i.e., 85 mol%. Thus, it has been difficult to directly use the resultant polylactic acid for molding, etc.

Also, as heterogeneous polymerization of a monomer in supercritical carbon dioxide, for example, JP-A No. 2009-167409 discloses a method of synthesizing colored polymer particles from a radical polymerizable monomer in the presence of a surfactant containing a perfluoroalkyl group.

However, the fluorine-containing surfactant used in this method is very expensive and also is problematic in terms of safety. Further, this method problematically cannot produce polymer particles having a small molecular weight distribution (Mw/Mn) (about 2 or smaller) attained by the present invention.

JP-A No. 2009-132878 discloses a method of producing polymer particles using a polymer radical polymerization initiator containing an organosiloxane skeleton, while synthesizing a polymer surfactant at one step without separately synthesizing and preparing surfactants suitable for monomers.

However, this method also cannot problematically produce polymer particles having a molecular weight distribution (Mw/Mn) of 2 or less. Further, there is no description about ring-opening polymerizable monomers.

As described above, no reports have been presented on a method for producing, from a ring-opening polymerizable monomer (serving as a starting material), polymer particles (including polylactic acid) having a narrow molecular weight distribution through one step without using a metal catalyst at a lower temperature and a higher yield than the conventional cases, while making the most of using supercritical carbon dioxide as a solvent from the viewpoints of cost reduction, environmental load reduction, energy saving and resource saving.

The present invention solves the above existing problems and aims to achieve the following object. Specifically, an object of the present invention is to provide a method for efficiently producing a polymer from a ring-opening polymerizable monomer at high yield through one step with less residual monomers, wherein the polymer has a molecular weight controlled as desired and a narrow molecular weight distribution. This method requires no metal catalyst and no additional step of removing the residual monomer or other unnecessary materials. Another object of the present invention is to provide a polymer obtained by this method.

Chemical Abstracts, XP002638868, No. 2005:1204747, & CN 1583819 A relate to a method for synthezising polylactide in supercritical CO₂.

JP 2009-001614 A describes a method for producing a polylactic acid block copolymer which may comprise a first step of obtaining a poly-D-lactic acid; and a second step of carrying out the ring opening polymerization of an L-lactide in the presence of the compound having a guanidine skeleton in an organic solvent.

Lohmeier, B.G.G., et al., Macromolecules, vol. 39, p. 8574-8583, describes guanidine and amidine organocatalysts for ring-opening polymerizations of cyclic esters in organic solvents.

Nederberg, F., et al., Angew. Chem. Int. Ed., vol. 40, no. 14, p. 2712-2715, relates to the catalytic behaviour of specific pyridine compounds in the polymerization of lactide in an organic solvent.

### BRIEF SUMMARY OF THE INVENTION

Means for solving the above existing problems are as follows.
<1> A method for producing a polymer, including:
   polymerizing a ring-opening polymerizable monomer in a compressive fluid with a metal-free organic catalyst to produce a polymer.
<2> The method according to <1>, wherein the polymerizing the ring-opening polymerizable monomer is performed in the presence of a surfactant to produce the polymer in a form of particles.
<3> The method according to <2>, wherein the surfactant has compatibility to both the compressive fluid and the ring-opening polymerizable monomer.
<4> The method according to <2> or <3>, wherein the surfactant has a perfluoroalkyl group, a polydimethylsiloxane group or a polyacrylate group.
<5> The method according to any one of <1> to <4>, wherein a polymer conversion rate of the ring-opening polymerizable monomer is 95 mol% or higher.
<6> The method according to any one of <1> to <5>, wherein the organic catalyst is a nucleophilic nitrogen compound having basicity.
<7> The method according to any one of <1> to <5>, wherein the organic catalyst is a cyclic compound containing a nitrogen atom.
<8> The method according to any one of <1> to <7>, wherein the organic catalyst is any one selected from the group consisting of a cyclic amine, a cyclic diamine, a cyclic diamine compound having an amidine skeleton, a cyclic triamine compound having a guanidine skeleton, a heterocyclic aromatic organic compound containing a nitrogen atom and an N-heterocyclic carbene.
<9> The method according to <8>, wherein the organic catalyst is any one selected from the group consisting of 1,4-diazabicyclo-[2.2.2]octane, 1,8-diazabicyclo[5.4.0]undec-7-ene, 1,5,7-triazabicyclo[4.4.0]dec-5-ene, diphenylguanidine, N,N-dimethyl-4-aminopyridine, 4-pyrrolidinopyridine and 1,3-di-tert-butylimidazol-2-ylidene.
<10> The method according to any one of <1> to <9>, wherein the ring-opening polymerizable monomer is a monomer having an ester bond in a ring thereof.
<11> The method according to <10>, wherein the monomer having the ester bond in the ring thereof is a cyclic ester or a cyclic carbonate.
<12> The method according to <11>, wherein the cyclic ester is a cyclic dimer obtained by dehydration-condensating L-form compounds with each other, D-form compounds with each other, or an L-form compound with a D-form compound, each of the compounds being represented by General Formula α:

   R-C*-H(-OH)(COOH) ··· General Formula α

   where R represents a C1-C10 alkyl group.
<13> The method according to any one of <1> to <12>, wherein the ring-opening polymerizable monomer is a lactide of L-form lactic acids, a lactide of D-form lactic acids, or a lactide of an L-form lactic acid and a D-form lactic acid.
<14> The method according to any one of <1> to <13>, wherein the compressive fluid is formed of carbon dioxide.
<15> The method according to any one of <1> to <14>, wherein the polymer has a molecular weight distribution Mw/Mn of 1.5 or less, where Mw denotes a weight average molecular weight of the polymer and Mn denotes a number average molecular weight of the polymer.
<16> The method according to any one of <1> to <15>, wherein the polymer contains a urethane bond or an ether bond in a molecule thereof.
<17> A polymer obtained by the method according to any one of <1> to <16>, wherein the polymer has an average particle diameter of 1 mm or less and is in a form of particles.
<18> The polymer according to <17>, wherein the polymer has a molecular weight distribution Mw/Mn of 1.5 or less, where Mw denotes a weight average molecular weight of the polymer and Mn denotes a number average molecular weight of the polymer.

The present invention can provide a method for efficiently producing a polymer from a ring-opening polymerizable monomer at high yield through one step with less residual monomers, wherein the polymer has a molecular weight controlled as desired and a narrow molecular weight distribution, and the method requires no metal catalyst, which considerably degrades thermal stability and safety of the resultant polymer, and requires no additional step of removing the residual monomer or other unnecessary materials, which step considerably degrades moldability and thermal stability of the resultant polymer; and a polymer obtained by this method.

### BRIEF DESCRIPTION OF THE DRAWINGS

Fig. 1 is a general phase diagram showing the state of a substance varying depending on pressure and temperature conditions.
Fig. 2 is a phase diagram which defines a compressive fluid used in the present invention.
Fig. 3 is an electron microscope image showing the aggregation state of polymer particles 1.
Fig. 4 is an electron microscope image of each of polymer particles 1.
Fig. 5 is an image obtained by photographing polymer particles 1 with a digital camera.
Fig. 6 is an image obtained by photographing an aggregated polymer of Comparative Example 2-1 with a digital camera.

### DETAILED DESCRIPTION OF THE INVENTION

### (Method for producing a polymer)

The present invention has technical features of polymerizing a ring-opening polymerizable monomer in a compressive fluid and of using an organic catalyst containing no metal atom (metal-free organic catalyst).

Conventionally, supercritical carbon dioxide is considered unusable as a solvent for living anionic polymerization, since carbon dioxide is reactive with a nucleophilic compound having basicity (see "The Latest Applied Technology of Supercritical Fluid (CHO RINKAI RYUTAI NO SAISHIN OUYOU GIJUTSU)," p. 173, published by NTS Inc. on March 15, 2004).

The present invention, however, has overcome this conventional finding. That is, it has been found that a nucleophilic organic catalyst having basicity stably coordinates with a ring-opening polymerizable monomer to open the ring thereof, and the polymerization reaction quantitatively proceeds and as a result proceeds in a living manner even in supercritical carbon dioxide. Here, the wording "a reaction proceeds in a living manner" means that the reaction quantitatively proceeds without involving side reactions such as migration reaction and termination reaction, and the produced polymer has a narrow molecular weight distribution (monodispersity).

In addition, the method of the present invention employs a metal-free organic catalyst and thus, can solve the above-described various problems.

Furthermore, the present invention has a technical feature of polymerizing a ring-opening polymerizable monomer simultaneously with granulating the resultant polymer (particle formation) in a compressive fluid in the presence of a surfactant additionally added. The present invention first discloses the granulation of polymers using the ring-opening polymerizable monomer in the compressive fluid.

### <Compressive fluid>

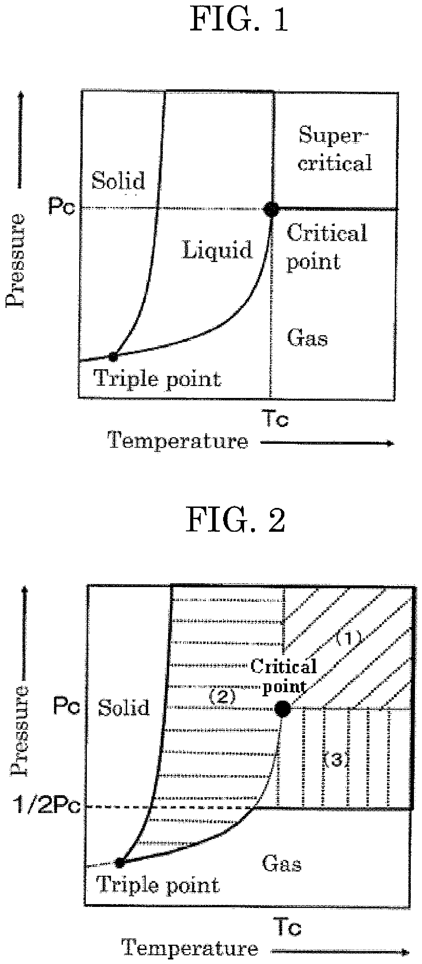

In the present invention, the "compressive fluid" refers to a substance present in any one of the regions (1), (2) and (3) of Fig. 2 in the phase diagram of Fig. 1. In Figs. 1 and 2, Pc and Tc denote a critical pressure and a critical temperature, respectively.

In such regions, the substance is known to have extremely high density and show different behaviors from those shown at normal temperature and normal pressure. Notably, the substance present in the region (1) is a supercritical fluid. The supercritical fluid is a fluid that exists as a noncondensable high-density fluid at a temperature and a pressure exceeding the corresponding critical points, which are limiting points at which a gas and a liquid can coexist. Also, the supercritical fluid does not condense even when compressed, and exists at a critical temperature or higher and a critical pressure or higher. Also, the substance present in the region (2) is a liquid, but in the present invention, is a liquefied gas obtained by compressing a substance existing as a gas at normal temperature (25°C) and normal pressure (1 atm). Further, the substance present in the region (3) is a gas, but in the present invention, is a high-pressure gas whose pressure is 1/2 Pc or higher.

Examples of the substance usable as the compressive fluid include carbon monoxide, carbon dioxide, dinitrogen monoxide, nitrogen, methane, ethane, propane, 2,3-dimethylbutane and ethylene. These may be used alone or in combination.

Among them, carbon dioxide is preferred, since its critical pressure and temperature are about 7.4 MPa and about 31°C, it can be easily brought into a critical state, and it is nonflammable to allow easy handling.

Also, when carbon dioxide is used as the compressive fluid, the temperature is preferably 25°C or higher and the pressure is preferably 5 MPa or higher, considering the reaction efficiency, etc. More preferably, supercritical carbon dioxide is used.

The pressure upon polymerization; i.e., the pressure of the compressive fluid, is preferably a pressure at which the compressive fluid is brought into a supercritical state, in order to increase dissolvability of the monomer into the compressive fluid and make the polymerization reaction to proceed uniformly and quantitatively, although the compressive fluid may be high-pressure gas or liquefied gas. When carbon dioxide is used as the compressive fluid, the pressure must be 3.7 MPa or higher, preferably 5 MPa or higher, more preferably 7.4 MPa (critical pressure) or higher.

### <Ring-opening polymerizable monomer>

The ring-opening polymerizable monomer which can be polymerized in the present invention preferably contains an ester bond in the ring. Examples thereof include cyclic esters and cyclic carbonates.

The cyclic esters are not particularly limited and may be those known in the art. Particularly preferred monomers are, for example, cyclic dimers obtained by dehydration-condensating L-form compounds with each other, D-form compounds with each other, or an L-form compound with a D-form compound, each of the compounds being represented by General Formula α: R-C*-H(-OH)(COOH) where R represents a C1-C10 alkyl group.

Specific examples of the compound represented by General Formula α include enantiomers of lactic acid, enantiomers of 2-hydroxybutanoic acid, enantiomers of 2-hydroxypentanoic acid, enantiomers of 2-hydroxyhexanoic acid, enantiomers of 2-hydroxyheptanoic acid, enantiomers of 2-hydroxyoctanoic acid, enantiomers of 2-hydroxynonanoic acid, enantiomers of 2-hydroxydecanoic acid, enantiomers of 2-hydroxyundecanoic acid, and enantiomers of 2-hydroxydodecanoic acid. Of these, enantiomers of lactic acid are particularly preferred since they have high reactivity and are easily available. The cyclic dimers may be used alone or in combination.

The other cyclic esters than those represented by General Formula α include aliphatic lactones such as β-propiolactone, β-butyrolactone, γ-butyrolactone, γ-hexanolactone, γ-octanolactone, δ-valerolactone, δ-hexanolactone, δ-octanolactone, ε-caprolactone, δ-dodecanolactone, α-methyl-γ-butyrolactone, β-methyl-δ-valerolactone, glycolide and lactide. Of these, ε-caprolactone is particularly preferred since it has high reactivity and is easily available.

Also, non-limiting examples of the cyclic carbonates include ethylene carbonate and propylene carbonate.

The ring-opening polymerizable monomers may be used alone or in combination. The obtained polymer preferably has a glass transition temperature equal to or higher than room temperature. When the glass transition temperature is too low, the polymer cannot be recovered as particles in some cases.

### <Organic catalyst>

The organic catalyst employed in the method of the present invention for producing a polymer is preferably a metal-free organic catalyst in consideration of the influences to the environment.

The metal-free organic catalyst may be any catalysts so long as they act on ring-opening reaction of the ring-opening polymerizable monomer to form an active intermediate together with the ring-opening polymerizable monomer and then are removed (regenerated) through reaction with an alcohol. The polymerization reaction proceeds even using a cationic catalyst. However, the cationic catalyst pulls hydrogen atoms out from the polymer backbone (back-biting). As a result, the produced polymer has a broad molecular weight distribution and also, high-molecular-weight polymers are difficult to obtain. Thus, preferred are compounds having basicity and serving as a nucleophilic agent. More preferred are compounds containing a nitrogen atom, and particularly preferably are cyclic compounds containing a nitrogen atom. Examples of the compounds include cyclic monoamines, cyclic diamines (cyclic diamine compounds having an amidine skeleton), cyclic triamine compounds having a guanidine skeleton, heterocyclic aromatic organic compounds containing a nitrogen atom and N-heterocyclic carbenes.

Non-limiting examples of the cyclic amine include quinuclidine. Non-limiting examples of the cyclic diamine include 1,4-diazabicyclo-[2.2.2]octane (DABCO) and 1,5-diazabicyclo(4,3,0)nonene-5. Non-limiting examples of the cyclic diamine compound having an amidine skeleton include 1,8-diazabicyclo[5.4.0]undec-7-ene (DBU) and diazabicyclononene. Non-limiting examples of the cyclic triamine compound having a guanidine skeleton include 1,5,7-triazabicyclo[4.4.0]dec-5-ene (TBD) and diphenylguanidine (DPG). Non-limiting examples of the heterocyclic aromatic organic compound containing a nitrogen atom include N,N-dimethyl-4-aminopyridine (DMAP), 4-pyrrolidinopyridine (PPY), pyrrocolin, imidazole, pyrimidine and purine. Non-limiting examples of the N-heterocyclic carbene include 1,3-di-tert-butylimidazol-2-ylidene (ITBU). Of these, DABCO, DBU, DPG, TBD, DMAP, PPY and ITBU are preferred.

The type and the amount of the metal-free organic catalyst used cannot flatly be determined since they vary depending on combinations of the compressive fluid and the ring-opening polymerizable monomer. However, the amount of the organic catalyst is preferably 0.01 mol% to 15 mol%, more preferably 0.1 mol% to 1 mol%, still more preferably 0.3 mol% to 0.5 mol%, relative to 100 mol% of the ring-opening polymerizable monomer. When the amount of the organic catalyst used is less than 0.01 mol%, the organic catalyst is deactivated before completion of the polymerization reaction, and as a result a polymer having a target molecular weight cannot be obtained in some cases. Whereas when the amount of the organic catalyst used is more than 15 mol%, it may be difficult to control the polymerization reaction.

Also, the polymerization reaction temperature cannot flatly be determined since it varies depending on, for example, combinations of the compressive fluid, the ring-opening polymerizable monomer and the organic catalyst. In general, the polymerization reaction temperature is about 40°C to about 150°C, preferably 50°C to 120°C, more preferably 60°C to 100°C. When the polymerization reaction temperature is lower than 40°C, the reaction rate easily decreases, and as a result the polymerization reaction cannot be made to proceed quantitatively in some cases. Whereas when the polymerization reaction temperature exceeds 150°C, depolymerization reaction proceeds in parallel, and as a result the polymerization reaction cannot be made to proceed quantitatively.

The polymerization reaction time is appropriately determined considering the target molecular weight of the polymer. When the molecular weight is in the range of 3,000 to 100,000, the polymerization reaction time is generally 2 hours to 12 hours.

Also, in order for the polymerization reaction to proceed uniformly and quantitatively, the difference in density between the monomers and the polymer particles is compensated through stirring so that the polymer particles do not sediment.

The pressure upon polymerization; i.e., the pressure of the compressive fluid, is preferably a pressure at which the compressive fluid is brought into a supercritical state in order to increase dissolvability of the monomer into the compressive fluid and make the polymerization reaction to proceed uniformly and quantitatively, although the compressive fluid may be high-pressure gas or liquefied gas. When carbon dioxide is used as the compressive fluid, the pressure is 3.7 MPa or higher, preferably 7.4 MPa or higher.

Upon polymerization, a ring-opening polymerization initiator is preferably added to the reaction system in order to control the molecular weight of the obtained polymer. The ring-opening polymerization initiator may be those known in the art such as alcohols. The alcohols may be, for example, any of saturated or unsaturated, aliphatic mono-, di- or polyalcohols. Specific examples thereof include monoalcohols such as methanol, ethanol, propanol, butanol, pentanol, hexanol, heptanol, nonanol, decanol, lauryl alcohol, myristyl alcohol, cetyl alcohol and stearyl alcohol; dialcohols such as ethylene glycol, 1,2-propanediol, 1,3-propanediol, 1,3-butanediol, 1,4-butanediol, hexanediol, nonanediol, tetramethylene glycol and polyethylene glycol; polyalcohols such as glycerol, sorbitol, xylitol, ribitol, erythritol and triethanolamine; and methyl lactate and ethyl lactate. Also, use of a polymer containing an alcohol residue at the end enables synthesis of diblock copolymers and triblock compolymers.

The amount of the ring-opening polymerization initiator used may be appropriately adjusted considering the target molecular weight of the polymer. Preferably, the amount of the ring-opening polymerization initiator is about 0.1 parts by mass to about 5 parts by mass relative to 100 parts by mass of the ring-opening polymerizable monomer.

If necessary, a polymerization terminator (e.g., benzoic acid, hydrochloric acid, phosphoric acid, metaphosphoric acid, acetic acid and lactic acid) may be used after completion of polymerization reaction.

### <Surfactant>

In the present invention, the polymerization system may further contain a surfactant that dissolves in the compressive fluid and has compatibility to both the compressive fluid and the ring-opening polymerizable monomer. Making the polymerization reaction to proceed uniformly using the surfactant has such advantageous effects that, for example, the resultant polymer can have a narrow molecular weight distribution and easily produced as particles. For example, when carbon dioxide is used as the compressive fluid, the surfactant having a CO₂-philic group and a monomer-philic group in the molecule may be used.

Examples of the CO₂-philic group include a perfluoroalkyl group, a polyacrylate group, a polydimethylsiloxane group, an ether group and a carbonyl group.

A compound containing an active hydrogen in its structure (e.g., an alcohol) is preferably used as the surfactant, since such a compound can serve as not only the surfactant but also the initiator.

The monomer-philic group may be selected in consideration of the type of the monomer used. For example, when the monomer used is a lactide or lactone, preferred are surfactants having a carbonyl group in the form of, for example, an ester bond and an amide bond.

When the surfactant is incorporated into the polymerization system, the surfactant may be added to the compressive fluid or the ring-opening polymerizable monomer.

Specific examples of the surfactant include those containing, as a partial structure, a structure represented by any one of General Formulas (1) to (7): 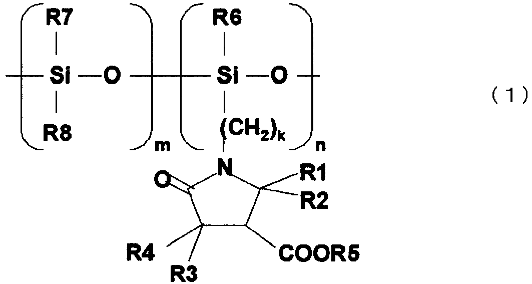 where R1 to R5 each represent a hydrogen atom or a C1-C4 lower alkyl group, R6 to R8 represent a C1-C4 lower alkyl group, and each of m, n and k is an integer of 1 or greater indicating the number of repeating units where m/n = 0.3 to 70 and 1 ≤ k ≤ 4, the molecular weight of the surfactant is 7,000 or lower, and R1 to R8 may be identical or different, 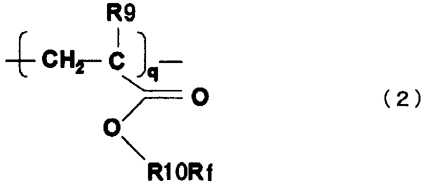 where R9 represents a hydrogen atom or a methyl group, R10 represents a methylene group or an ethylene group, Rf represents a C7-C10 perfluoroalkyl group and q is an integer of 1 or greater indicating the number of repeating units; and also, the molecular weight of the surfactant is 2,500 or lower, 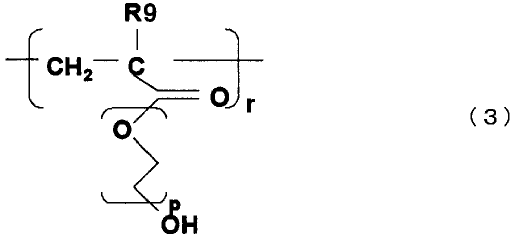 where R9 represents a hydrogen atom or a methyl group and each of r and p is an integer of 1 or greater indicating the number of repeating units; and also, the molecular weight of the surfactant is 5,500 or lower, 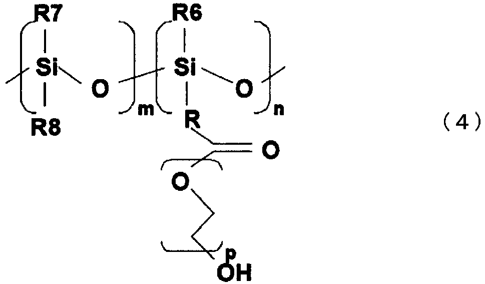 where R6 to R8 each represent a C1-C4 lower alkyl group, R represents a C1-C4 lower alkylene group, and each of m, n and p is an integer of 1 or greater indicating the number of repeating units where m/n = 0.3 to 70, the molecular weight of the surfactant is 5,000 or lower, and R6 to R8 may be identical or different, 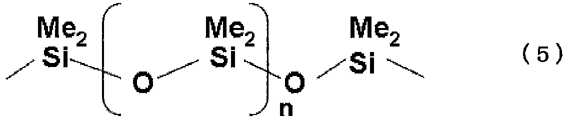 where n is an integer of 1 or greater indicating the number of repeating units and Me denotes a methyl group; and the molecular weight of the surfactant is 5,000 or lower, 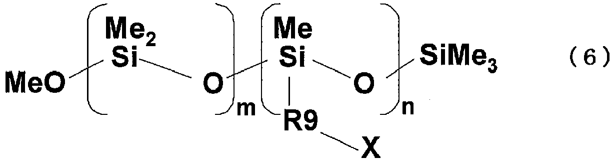 where R9 represents a C1-C4 lower alkyl group, X represents a hydrophilic group (e.g., a hydroxy group, a carboxyl group and an amino group), and each of m and n is an integer of 1 or greater indicating the number of repeating units where m/n = 0.3 to 70; and the molecular weight of the surfactant is 5,000 or lower, 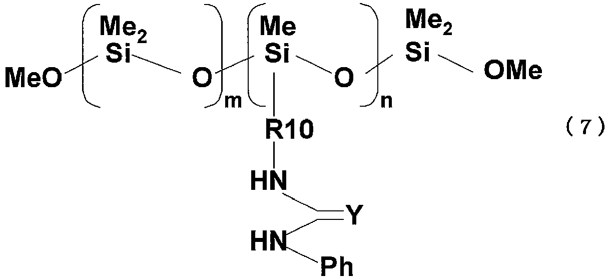 where R10 represents a C1-C4 lower alkyl group, Y represents an oxygen atom or a sulfur atom, Ph denotes a phenyl group, each of m and n is an integer of 1 or greater indicating the number of repeating units where m/n = 0.3 to 70; and the molecular weight of the surfactant is 5,000 or lower.

Among others, preferred are the surfactants containing a partial structure represented by General Formula (1), in which R6 to R8 each preferably represent a methyl group and k is preferably 2.

In General Formula (1), when k is small, the pyrrolidone skeleton and the silicone skeleton become closer together sterically, and the surfactant having such a structure degrades in its actions as a surfactant. When k becomes greater, the dissolvability in the compressive fluid may be decreased.

The surfactant containing the partial structure represented by General Formula (1) is particularly preferably surfactant 1 given below. This surfactant is commercially available from Croda Japan under the trade name of "MONASIL PCA."

### Surfactant 1

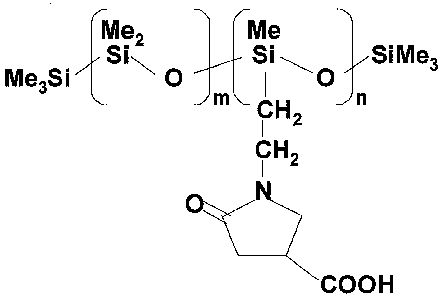

where each of m and n is an integer of 1 or greater indicating the number of repeating units.

The surfactant used in the present invention may be other surfactants than those represented by General Formulas (1) to (7), so long as they dissolve in the compressive fluid and have compatibility to both the compressive fluid and the ring-opening polymerizable monomer. Examples of the other surfactants include those represented by the following General Formulas (8) to (11), where each of m and n is an integer of 1 or greater indicating the number of repeating units.

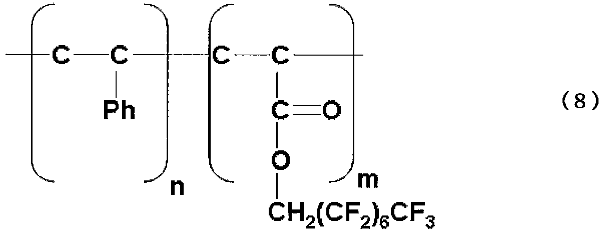

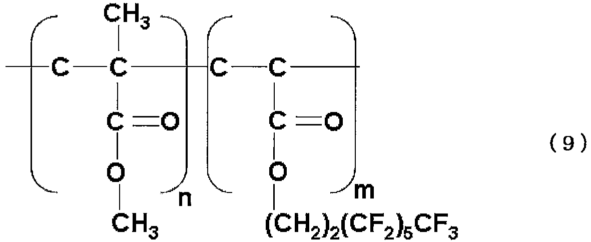

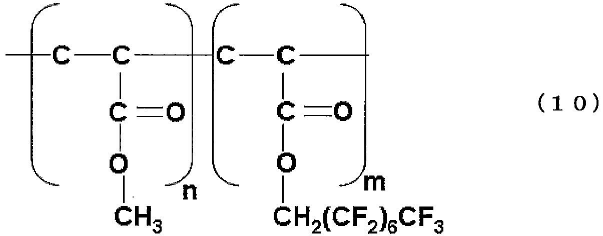

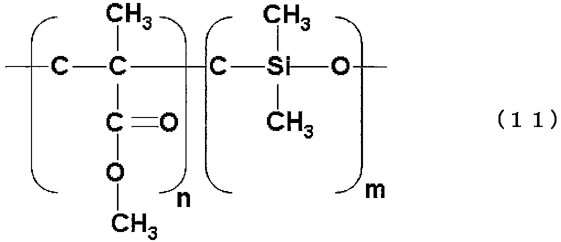

The surfactant to be used is appropriately selected depending on the type of the compressive fluid or considering whether the target product is polymer particles and seed particles (described below) or growth particles. From the viewpoint of sterically and electrostatically preventing the resultant polymer particles from being aggregated, particularly preferred are surfactants that have high compatibility and adsorbability to the surfaces of the polymer particles and also have high compatibility and dissolvability to the compressive fluid. Of these surfactants, particularly preferred are those having a block structure of hydrophilic groups and hydrophobic groups, since they have an excellent granularity.

Also, in order to increase steric repulsion between the particles, the surfactants selected have a molecular chain of a certain length, preferably have a molecular weight of 10,000 or higher. However, when the molecular weight is too large, the surfactant is considerably increased in liquid viscosity, causing poor operability and poor stirring performance. As a result, a large amount of the surfactant may be deposited on the surfaces of some particles while a small amount of the surfactant may be deposited on the surfaces of other particles. Thus, care should be taken about selection of the surfactant.

The amount of the surfactant used varies depending on the type of the ring-opening polymerizable monomer or the surfactant. In general, it is preferably 0.1% by mass to 10% by mass, more preferably 1% by mass to 5% by mass, relative to the amount of the compressive fluid.

When the concentration of the surfactant in the compressive fluid is low, the produced polymer particles have a relatively large particle diameter. When the concentration of the surfactant in the compressive fluid is high, the produced polymer particles have a small particle diameter. However, even when used in an amount exceeding 10% by mass, the surfactant does not contribute to the production of the polymer particles having a small particle diameter.

The particles produced at an early stage of polymerization are stabilized by the surfactant existing in equilibrium between the compressive fluid and the surfaces of the polymer particles. However, when the ring-opening polymerizable monomer is contained in the compressive fluid in a considerably large amount, the concentration of the polymer particles becomes high, resulting in that the polymer particles disadvantageously aggregate regardless of steric repulsion caused by the surfactant.

Further, when the amount of the ring-opening polymerizable monomer is extremely larger than that of the compressive fluid, the produced polymer is totally dissolved, resulting in that the polymer is precipitated only after the polymerization proceeds to some extent. In this case, the precipitated polymer particles are in the form of highly adhesive aggregated matter.

For this reason, limitation is imposed on the amount of the ring-opening polymerizable monomer used for producing polymer particles relative to the compressive fluid. The amount thereof is preferably 500% by mass or less, more preferably 250% by mass or less, relative to the amount of the compressive fluid. However, since the density of the ring-opening polymerizable monomer varies depending on the state of the compressive fluid, the amount of the ring-opening polymerizable monomer also varies depending on the state of the compressive fluid.

The state of the polymer can be observed with, for example, a scanning electron microscope or SEM.

### <Polymerization method>

The production method of the present invention can produce polymer particles having an average particle diameter of 1 mm or less. The particle diameter can be controlled by controlling, for example, the pressure, temperature and reaction time during the reaction, and the amount of the surfactant used. If necessary, by varying the reaction conditions, various polymer particles from truly spherical polymer particles to amorphous polymer particles can be obtained.

The polymerization method employable in the present invention is, for example, dispersion polymerization, suspension polymerization and emulsion polymerization, and may be selected from these methods depending on the intended purpose. In particular, dispersion polymerization is superior to suspension polymerization or emulsion polymerization, since it can make the most of the advantages of the compressive fluid, monodispersed polymer particles can be obtained, and the produced polymer particles have a narrow particle size distribution.

In an another employable method, polymer particles (seed particles), having a smaller particle diameter than the target particle diameter and a narrow particle size distribution, are added in advance and grown through reaction with the monomer in the same system as described above.

The monomer used in the growth reaction may be the same as or different from that used for producing the seed particles. The produced polymer must be dissolved in the compressive fluid.

By returning the compressive fluid in which the polymer produced in the above-described method has been dispersed to the normal temperature and normal pressure, dried polymer particles can be obtained.

In the present invention, a polymerization initiator may be employed. Examples of the polymerization initiator include aliphatic monoalcohols and polyalcohols.

Examples of the aliphatic monoalcohol include methanol, ethanol, propanol, isopropanol, butanol, hexanol and pentanol.

Examples of the aliphatic polyalcohol include ethylene glycol, propylene glycol, 1,3-butanediol, 1,4-butanediol, 2,3-butanediol, diethylene glycol, triethylene glycol, 1,5-pentanediol, 1,6-hexanediol, neopentyl glycol, 2-ethyl-1,3-hexanediol, polyethylene glycol, triethanol amine, hydrogenated bisphenol A, and divalent alcohols obtained by adding to bisphenol A a cyclic ether such as ethylene oxide or propylene oxide.

One exemplary process of the polymerization is as follows. Specifically, a surfactant is completely dissolved in a compressive fluid; one or more ring-opening polymerizable monomers and a polymerization initiator are added to the compressive fluid; and the resultant mixture is heated to a temperature corresponding to the decomposition rate of the polymerization initiator while stirred at a rate at which the flow of the reaction container becomes uniform. In general, the heating temperature is preferably 40°C to 100°C, more preferably 50°C to 85°C.

Notably, the temperature at an early stage of the polymerization greatly influences the particle diameter of the produced polymer particles. Thus, in a more preferable manner, after addition of the ring-opening polymerizable monomer, the temperature of the resultant mixture is increased to the polymerization temperature, and then the initiator is dissolved in a small amount of the compressive fluid and added to the mixture.

Upon polymerization, the reaction container must be purged with an inert gas (e.g., nitrogen gas, argon gas or carbon dioxide gas) to sufficiently remove water contained in the air of the reaction container. When water is not removed sufficiently, the particle diameter of the produced polymer particles cannot be made to be uniform, resulting in that fine particles are easily formed.

The water content of the polymerization reaction system is 4 mol% or less relative to 100 mol% of the ring-opening polymerizable monomer. When the water content is higher than 4 mol%, water itself serves as the initiator, potentially making it difficult to control the molecular weight depending on the target molecular weight. The water content is preferably 1 mol% or less, more preferably 0.5 mol%. If necessary, such a pre-treatment may be performed that removes water contained in the ring-opening polymerizable monomer and the other raw materials.

In order to increase the polymerization rate, the polymerization must be performed for 5 hours to 72 hours. The polymerization speed can be increased by terminating the polymerization when the desired particle diameter and particle size distribution are attained, by gradually adding the polymerization initiator, or by performing the reaction under high-pressure conditions.

### <Polymer conversion rate>

In the method of the present invention for producing a polymer, the conversion rate of monomer to polymer (polymer conversion rate) is not particularly limited and may be selected depending on the intended purpose. The conversion rate is preferably 95 mol% or higher.

The polymer conversion rate can be determined with a nuclear magnetic resonance apparatus as a value obtained as follows: the polymer conversion rate (mol%) = 100 - amount of unreacted monomer (mol%). Here, the amount of unreacted monomer is calculated from the following equation: 100 × the ratio of a peak area attributed to the unreacted monomer to a peak area attributed to the reacted polymer.

### (Polymer)

A polymer of the present invention is a polymer obtained by the method of the present invention for producing a polymer.

The molecular weight distribution (weight average molecular weight or Mw/number average molecular weight or Mn) of the polymer is not particularly limited and may be appropriately selected depending on the intended purpose. The molecular weight distribution is preferably 2 or less, more preferably 1.5 or less.

The molecular weight of the polymer can be measured through, for example, gel permeation chromatography or GPC.

The polymer of the present invention can be suitably used for various applications such as biodegradable resins, electrophotographic developers, printing inks, building paints and cosmetics.

### EXAMPLES

The present invention will next be described in detail by way of Examples, which should not be construed as limiting the present invention thereto.

Notably, regarding the polymers produced in Examples and Comparative Examples, the molecular weight and the polymer conversion rate were measured as follows.

### <Measurement of molecular weight of polymer>

The molecular weight was measured through gel permeation chromatography or GPC under the following conditions.
Apparatus: GPC-8020 (product of TOSOH CORPORATION)
Column: TSK G2000HXL and G4000HXL (product of TOSOH
CORPORATION)
Temperature: 40°C
Solvent: Tetrahydrofuran or THF
Flow rate: 1.0 mL/min

First, a calibration curve of molecular weight was obtained using monodispersed polystyrene serving as a standard sample. A polymer sample (1 mL) having a polymer concentration of 0.5% by mass was applied and measured under the above conditions, to thereby obtain the molecular weight distribution of the polymer. The number average molecular weight Mn and the weight average molecular weight Mw of the polymer were calculated from the calibration curve. The molecular weight distribution is a value calculated by dividing Mw with Mn.

### <Polymer conversion rate>

The conversion rate of monomer to polymer was calculated in the below-described manner from Equation 1.

Polymer conversion rate (mol%) = 100 - amount of unreacted monomer (mol%) (Equation 1)

In the case of polylactic acid, the amount of unreacted monomer (mol%) was calculated in deuterated chloroform with a nuclear magnetic resonance apparatus JNM-AL300 (product of JEOL Ltd.) as a value obtained as follows: 100 × the ratio of a quartet peak area attributed to lactide (4.98 ppm to 5.05 ppm) to a quartet peak area attributed to polylactic acid (5.10 ppm to 5.20 ppm).

In the case of polycaprolactone, the amount of unreacted monomer (mol%) was calculated in deuterated chloroform with a nuclear magnetic resonance apparatus JNM-AL300 (product of JEOL Ltd.) as a value obtained as follows: 100 × the ratio of a triplet peak area attributed to caprolactone (4.22 ppm to 4.25 ppm) to a triplet peak area attributed to polycaprolactone (4.04 ppm to 4.08 ppm).

In the case of polycarbonate, the amount of unreacted monomer (mol%) was calculated in deuterated chloroform with a nuclear magnetic resonance apparatus JNM-AL300 (product of JEOL Ltd.) as a value obtained as follows: 100 × the ratio of a singlet peak area attributed to ethylene carbonate (4.54 ppm) to a quartet peak area attributed to polycarbonate (4.22 ppm to 4.25 ppm).

### (Example 1-1)

A pressure-resistant container was charged with a lactide of an L-lactic acid (90 parts by mass), a lactide of a D-lactic acid (10 parts by mass), lauryl alcohol (serving as an initiator) in an amount of 3.00 mol% relative to 100 mol% of the monomer, and 4-pyrrolidinopyridine (PPY) (3.3 parts by mass) and then heated to 60°C.

Subsequently, supercritical carbon dioxide (60°C, 10 MPa) was charged thereinto, followed by reaction at 60°C for 12 hours.

After completion of reaction, a pressure pump and a back pressure valve were used to adjust the flow rate at the outlet of the back pressure valve to 5.0 L/min. Then, supercritical carbon dioxide was allowed to flow for 30 min, and PPY and the residual monomer (lactide) were removed.

Thereafter, the reaction system was gradually returned to normal temperature and normal pressure. Three hours after, a polymer (polylactic acid) contained in the container were taken out.

With the above method, the polymer was measured for physical properties (Mn, Mw/Mn, polymer conversion rate), which are shown in Table 1-1.

### (Examples 1-2 to 1-4)

The procedure of Example 1-1 was repeated, except that the amount of the initiator was changed as shown in the columns of Examples 1-2 to 1-4 in Table 1-1, to thereby obtain polymers.

With the above method, the obtained polymers were measured for physical properties, which are shown in Table 1-1.

### (Examples 1-5 to 1-7)

The procedure of Example 1-1 was repeated, except that the reaction temperature was changed as shown in the columns of Examples 1-5 to 1-7 in Table 1-1, to thereby obtain polymers.

With the above method, the obtained polymers were measured for physical properties, which are shown in Table 1-1.

### (Examples 1-8 to 1-10 and Comparative Examples 1-1 to 1-3)

The procedure of Example 1-1 was repeated, except that the reaction pressure and the reaction temperature were changed as shown in the columns of Examples 1-8 to 1-10 and Comparative Examples 1-1 to 1-3 in Table 1-2, to thereby obtain polymers.

With the above method, the obtained polymers were measured for physical properties, which are shown in Table 1-2.

### (Examples 1-11 to 1-16)

The procedure of Example 1-1 was repeated, except that the organic catalyst used was changed to 4-dimethylaminopyridine (DMAP) and that the reaction pressure and the reaction temperature were changed as shown in the columns of Examples 1-11 to 1-16 in Table 1-3, to thereby obtain polymers.

With the above method, the obtained polymers were measured for physical properties, which are shown in Table 1-3.

### (Examples 1-17 to 1-20)

The procedure of Example 1-1 was repeated, except that the initiator used was changed to ethanol in Example 1-17, to 2-propanol in Example 1-18, to t-butanol in Example 1-19 or to trifluoroethanol in Example 1-20, to thereby obtain a polymer.

With the above method, the obtained polymer was measured for physical properties, which are shown in Table 1-4.

### (Examples 1-21 to 1-23 and Comparative Examples 1-4)

The procedure of Example 1-1 was repeated, except that the organic catalyst used was changed to 1,4-diazabicyclo-[2.2.2]octane (DABCO) in Example 1-21, to 1,8-diazabicyclo[5.4.0]undec-7-ene (DBU) in Example 1-22 or to 1,3-di-tert-butylimidazol-2-yldene (ITBU) in Example 1-23, to thereby obtain a polymer. Also, the procedure of Example 1-1 was repeated, except that no organic catalyst was used and that the reaction temperature was changed to 80°C, to thereby obtain a polymer of Comparative Example 1-4.

With the above method, the obtained polymers were measured for physical properties, which are shown in Table 1-5.

### (Examples 1-24 to 1-26)

The procedure of Example 1-1 was repeated, except that the ring-opening polymerizable monomer used was changed to ε-caprolactone and that the organic catalyst used was changed to diphenylguanidine (DPG), to thereby obtain a polymer of Example 1-24. Also, the procedure of Example 1-1 was repeated, except that the ring-opening polymerizable monomer used was changed to ε-caprolactone and that the organic catalyst used was changed to 1,5,7-triazabicyclo[4.4.0]dec-5-ene (TBD), to thereby obtain a polymer of Example 1-25. Further, the procedure of Example 1-1 was repeated, except that the ring-opening polymerizable monomer used was changed to ethylene carbonate and that the organic catalyst used was changed to 1,8-diazabicyclo[5.4.0]undec-7-ene (DBU), to thereby obtain a polymer of Example 1-26.

The obtained polymers were measured for physical properties, which are shown in Table 1-5.

### (Example 1-27)

A pressure-resistant container was charged with a lactide of an L-lactic acid (90 parts by mass), a lactide of a D-lactic acid (10 parts by mass), lauryl alcohol (serving as an initiator) in an amount of 3.00 mol% relative to 100 mol% of the monomer, and 4-pyrrolidinopyridine (PPY) (3.3 parts by mass) and then heated to 60°C.

Subsequently, supercritical carbon dioxide (60°C, 10 MPa) was charged thereinto, followed by reaction at 60°C for 10 hours.

Thereafter, isophorone diisocyanate (chain extender) in an amount of 70 mol% relative to 100 mol% of the initiator was weighed in advance and placed in a separate container. This container was charged with supercritical carbon dioxide (60°C, 10 MPa), and then the resultant mixture was added dropwise to the pressure-resistant container by its own weight after these containers had been adjusted so as to be equal in pressure, followed by reaction at 60°C for 10 hours. Further, a pressure pump and a back pressure valve were used to adjust the flow rate at the outlet of the back pressure valve to 5.0 L/min. Then, supercritical carbon dioxide was allowed to flow for 30 min, and PPY and the residual monomer (lactide) were removed.

Thereafter, the reaction system was gradually returned to normal temperature and normal pressure. Three hours after, a polymer (polylactic acid) contained in the container were taken out.

With the above method, the polymer was measured for physical properties (Mn, Mw/Mn, polymer conversion rate), which are shown in Table 1-6.

### (Examples 1-28 to 1-30)

The procedure of Example 1-27 was repeated, except that the chain extender was changed to hexamethylene diisocyanate in Example 1-28, to tolylene diisocyanate in Example 1-29, or to neopentyl glycol diglycidyl ether in Example 1-30, to thereby obtain polymers of Examples 1-28 to 1-30.

With the above method, the obtained polymers were measured for physical properties (Mn, Mw/Mn, polymer conversion rate), which are shown in Table 1-6.

**Table 1-1**

| | Ex. 1-1 | Ex. 1-2 | Ex. 1-3 | Ex. 1-4 | Ex. 1-5 | Ex. 1-6 | Ex. 1-7 |
|---|---|---|---|---|---|---|---|
| Catalyst | PPY | PPY | PPY | PPY | PPY | PPY | PPY |
| Type of monomer | Lactide | Lactide | Lactide | Lactide | Lactide | Lactide | Lactide |
| Type of initiator | Lauryl alcohol | Lauryl alcohol | Lauryl alcohol | Lauryl alcohol | Lauryl alcohol | Lauryl alcohol | Lauryl alcohol |
| Amount of initiator (mol%) | 3.00 | 1.00 | 0.50 | 0.25 | 3.00 | 3.00 | 3.00 |
| Pressure (MPa) | 10 | 10 | 10 | 10 | 10 | 10 | 10 |
| Temperature (°C) | 60 | 60 | 60 | 60 | 25 | 80 | 100 |
| Reaction time (hr) | 12 | 10 | 10 | 10 | 10 | 10 | 10 |
| Number average molecular weight (Mn) | 5600 | 13000 | 23000 | 55000 | 5700 | 5000 | 5800 |
| Molecular weight distribution (Mw/Mn) | 1.2 | 1.3 | 1.2 | 1.4 | 1.6 | 1.2 | 1.3 |
| Polymer conversion rate (mol%) | 97 | 98 | 99 | 96 | 92 | 95 | 97 |

**Table 1-2**

| | Ex. 1-8 | Ex. 1-9 | Ex. 1-10 | Comp. Ex. 1-1 | Comp. Ex. 1-2 | Comp. Ex. 1-3 |
|---|---|---|---|---|---|---|
| Catalyst | PPY | PPY | PPY | PPY | PPY | PPY |
| Type of monomer | Lactide | Lactide | Lactide | Lactide | Lactide | Lactide |
| Type of initiator | Lauryl alcohol | Lauryl alcohol | Lauryl alcohol | Lauryl alcohol | Lauryl alcohol | Lauryl alcohol |
| Amount of initiator (mol%) | 3.00 | 3.00 | 3.00 | 3.00 | 3.00 | 3.00 |
| Pressure (MPa) | 5 | 8 | 16 | 3 | 3 | 3 |
| Temperature (°C) | 35 | 50 | 80 | 25 | 50 | 80 |
| Reaction time (hr) | 10 | 10 | 10 | 10 | 10 | 10 |
| Number average molecular weight (Mn) | 6400 | 5500 | 4800 | 2800 | 6800 | 17000 |
| Molecular weight distribution (Mw/Mn) | 1.5 | 1.6 | 1.4 | 1.8 | 1.7 | 1.6 |
| Polymer conversion rate (mol%) | 87 | 95 | 98 | 32 | 38 | 50 |

**Table 1-3**

| | Ex. 1-11 | Ex. 1-12 | Ex. 1-13 | Ex. 1-14 | Ex. 1-15 | Ex. 1-16 |
|---|---|---|---|---|---|---|
| Catalyst | DMAP | DMAP | DMAP | DMAP | DMAP | DMAP |
| Type of monomer | Lactide | Lactide | Lactide | Lactide | Lactide | Lactide |
| Type of initiator | Lauryl alcohol | Lauryl alcohol | Lauryl alcohol | Lauryl alcohol | Lauryl alcohol | Lauryl alcohol |
| Amount of initiator (mol%) | 3.00 | 3.00 | 3.00 | 3.00 | 3.00 | 3.00 |
| Pressure (MPa) | 6 | 10 | 16 | 12 | 12 | 12 |
| Temperature (°C) | 60 | 60 | 60 | 40 | 70 | 80 |
| Reaction time (hr) | 10 | 10 | 10 | 10 | 10 | 10 |
| Number average molecular weight (Mn) | 6300 | 6300 | 6800 | 5600 | 5200 | 5300 |
| Molecular weight distribution (Mw/Mn) | 1.5 | 1.4 | 1.6 | 1.2 | 1.3 | 1.4 |
| Polymer conversion rate (mol%) | 97 | 100 | 94 | 72 | 99 | 96 |

**Table 1-4**

| | Ex. 1-17 | Ex. 1-18 | Ex. 1-19 | Ex. 1-20 |
|---|---|---|---|---|
| Catalyst | DMAP | DMAP | DMAP | DMAP |
| Type of monomer | Lactide | Lactide | Lactide | Lactide |
| Type of initiator | Ethanol | 2-Propanol | t-Butanol | Trifluoroethanol |
| Amount of initiator (mol%) | 3.00 | 3.00 | 3.00 | 3.00 |
| Pressure (MPa) | 10 | 10 | 10 | 10 |
| Temperature (°C) | 60 | 60 | 60 | 60 |
| Reaction time (hr) | 10 | 10 | 10 | 10 |
| Number average molecular weight (Mn) | 6400 | 5600 | 6800 | 6800 |
| Molecular weight distribution (Mw/Mn) | 1.4 | 1.4 | 1.6 | 1.6 |
| Polymer conversion rate (mol%) | 97 | 100 | 96 | 97 |

**Table 1-5**

| | Ex. 1-21 | Ex. 1-22 | Ex. 1-23 | Ex. 1-24 | Ex. 1-25 | Ex. 1-26 | Comp. Ex. 1-4 |
|---|---|---|---|---|---|---|---|
| Catalyst | DABCO | DBU | ITBU | DPG | TDB | DBU | - |
| Type of monomer | Lactide | Lactide | Lactide | ε-Caprolactone | ε-Caprolactone | Ethylene carbonate | Lactide |
| Type of initiator | Lauryl alcohol | Lauryl alcohol | Lauryl alcohol | Lauryl alcohol | Lauryl alcohol | Lauryl alcohol | Lauryl alcohol |
| Amount of initiator (mol%) | 3.00 | 3.00 | 3.00 | 3.00 | 3.00 | 3.00 | 3.00 |
| Pressure (MPa) | 10 | 10 | 10 | 10 | 10 | 10 | 10 |
| Temperature (°C) | 60 | 60 | 60 | 60 | 60 | 60 | 80 |
| Reaction time (hr) | 10 | 10 | 10 | 10 | 10 | 10 | 10 |
| Number average molecular weight (Mn) | 6400 | 5400 | 7400 | 4200 | 5800 | 4800 | 2300 |
| Molecular weight distribution (Mw/Mn) | 1.2 | 1.2 | 1.4 | 1.3 | 1.4 | 1.3 | 1.7 |
| Polymer conversion rate (mol%) | 98 | 96 | 87 | 92 | 93 | 74 | 23 |

**Table 1-6**

| | Ex. 1-27 | Ex. 1-28 | Ex. 1-29 | Ex. 1-30 |
|---|---|---|---|---|
| Catalyst | PPY | PPY | PPY | PPY |
| Type of monomer | Lactide | Lactide | Lactide | Lactide |
| Type of initiator | Lauryl alcohol | Lauryl alcohol | Lauryl alcohol | Lauryl alcohol |
| Amount of initiator (mol%) | 3 | 3 | 3 | 3 |
| Chain extender | Isophorone diisocyanate | Hexamethylene diisocyanate | Tolylene diisocyanate | Neopentyl glycol diglycidyl ether |
| Amount of chain extender (mol%) | 70 | 70 | 70 | 70 |
| Pressure (MPa) | 10 | 10 | 10 | 10 |
| Temperature (°C) | 60 | 60 | 60 | 60 |
| Reaction time (hr) | 10 | 10 | 10 | 10 |
| Number average molecular weight (Mn) | 22000 | 25000 | 18000 | 24000 |
| Molecular weight distribution (Mw/Mn) | 1.2 | 1.3 | 1.2 | 1.4 |
| Polymer conversion rate (mol%) | 97 | 98 | 95 | 96 |

### (Synthesis Example 1: Synthesis of surfactant 2)

1H,1H-Perfluorooctyl acrylate (product of AZmax. co) (1,250 parts by mass) and 2,2'-azobis(2,4-dimethylvaleronitrile) (product of Wako Pure Chemical Industries, Ltd., V-65) (62.5 parts by mass) were charged into a pressure-resistant cell (in an amount of 50% by volume of the pressure-resistant cell). Carbon dioxide was selected as a supercritical fluid and supplied into the above reaction cell with a supply bomb. The reaction was performed for 24 hours while the pressure and the temperature were being adjusted to 15 MPa and 85°C with a pressure pump and a temperature controller.

Next, the temperature was decreased to 0°C, and the pressure was decreased to normal pressure using a back pressure valve, to thereby obtain surfactant 2 having the following Structural Formula. The number average molecular weight (Mn) thereof was found to be 2,500. Surfactant 2 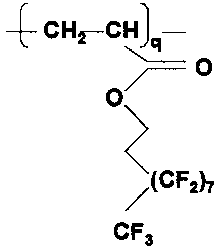 where q is an integer of 1 or greater indicating the number of repeating units.

### (Synthesis Example 2: Synthesis of surfactant 3)

Polyacrylic acid 5,000 (product of Wako Pure Chemical Industries, Ltd.) (36.1 parts by mass), chloroform (product of Wako Pure Chemical Industries, Ltd., 1,480 parts by mass) and 1,1'-carbonylbis-1H-imidazole (128 parts by mass) were added to a 6 mL-vial container, followed by stirring at room temperature for 10 min.

Next, polyethylene glycol (product of Wako Pure Chemical Industries, Ltd., molecular weight: 200) (500 parts by mass) was added thereto, followed by stirring at room temperature for 12 hours.

Next, chloroform was added thereto, followed by washing with water.

Next, the resultant reaction mixture was dried with sodium sulfate anhydrate, filtrated and concentrated under reduced pressure, to thereby obtain surfactant 3 having the following Structural Formula (yield: 73% by mass). The number average molecular weight thereof was found to be 5,200.

### Surfactant 3

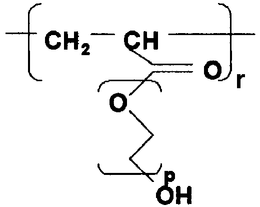

where each of r and p is an integer of 1 or greater indicating the number of repeating units.

### (Synthesis Example 3: Synthesis of surfactant 4)

Silicone oil carboxy-modified at its side chain (product of Shin-Etsu Silicones Co., KF-8012, particle diameter: 4,500) (12 parts by mass), chloroform (product of Wako Pure Chemical Industries, Ltd.) (33.3 parts by mass), 1,1'-carbonylbis-1H-imidazole (product of Wako Pure Chemical Industries, Ltd., molecular weight: 162, 0.65 parts by mass) and polyethylene glycol (product of Wako Pure Chemical Industries, Ltd., molecular weight: 200, 0.80 parts by mass) were added to a 50 mL-egg plant flask, followed by stirring at room temperature for 12 hours.

Next, a saturated sodium hydrogen carbonate aqueous solution was added thereto and the sodium stearate that precipitated was filtered off with a kiriyama funnel, followed by washing with a saturated sodium hydrogen carbonate aqueous solution.

Next, the resultant reaction mixture was dried with sodium sulfate anhydrate, filtrated with silica gel and concentrated under reduced pressure, to thereby obtain surfactant 4 having the following Structural Formula (yield: 91% by mass). The number average molecular weight thereof was found to be 4,700.

### Surfactant 4

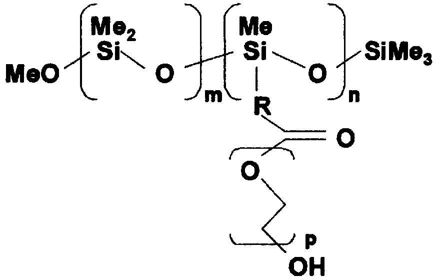

where each of m, n and p is an integer of 1 or greater indicating the number of repeating units.

### (Synthesis Example 4: Synthesis of surfactant 9)

Silicone oil amino-modified at its side chain and methoxy-modified at both ends (product of Shin-Etsu Silicones Co., KF-857, molecular weight: 790) (7.9 parts by mass), dichloromethane (product of Tokyo Chemical Industry Co., Ltd.) (66.6 parts by mass) and phenyl isocyanate (product of KANTO KAGAKU) (3.6 parts by mass) were added to a 300 mL-egg plant flask, followed by stirring at room temperature for 24 hours. Thereafter, hexane was added thereto, followed by washing with distilled water. The resultant reaction mixture was dried with sodium sulfate anhydrate and filtrated with cotton and silica gel, and the solvent was evaporated under reduced pressure, to thereby obtain surfactant 9 having the following Structural Formula (yield: 80%).

### (Synthesis Example 5: Synthesis of surfactant 10)

The procedure of Synthesis Example 4 was repeated, except that phenyl isocyanate was changed to phenyl isothiocyanate (product of Wako Pure Chemical Industries, Ltd., 4.0 parts by mass), to thereby obtain surfactant 10.

### (Example 2-1)

A micro tube was charged with L-lactide (882.4 parts by mass), 4-dimethylaminopyridine (DMAP) (48.9 parts by mass), surfactant 1 (49.7 parts by mass) and anhydrous ethanol (9.2 parts by mass). The micro tube was placed in a pressure-resistant container and heated to 60°C. Then, supercritical carbon dioxide (60°C, 8 MPa) was charged thereinto, followed by reaction at 60°C for 2 hours.

Next, the pressure pump and the back pressure valve were used to adjust the flow rate at the outlet of the back pressure valve to 5.0 L/min. Then, supercritical carbon dioxide was allowed to flow for 30 min. After the organic catalyst and the residual monomers had been removed, the reaction system was gradually returned to normal temperature and normal pressure. Three hours after, polymer particles 1 contained in the container were taken out.

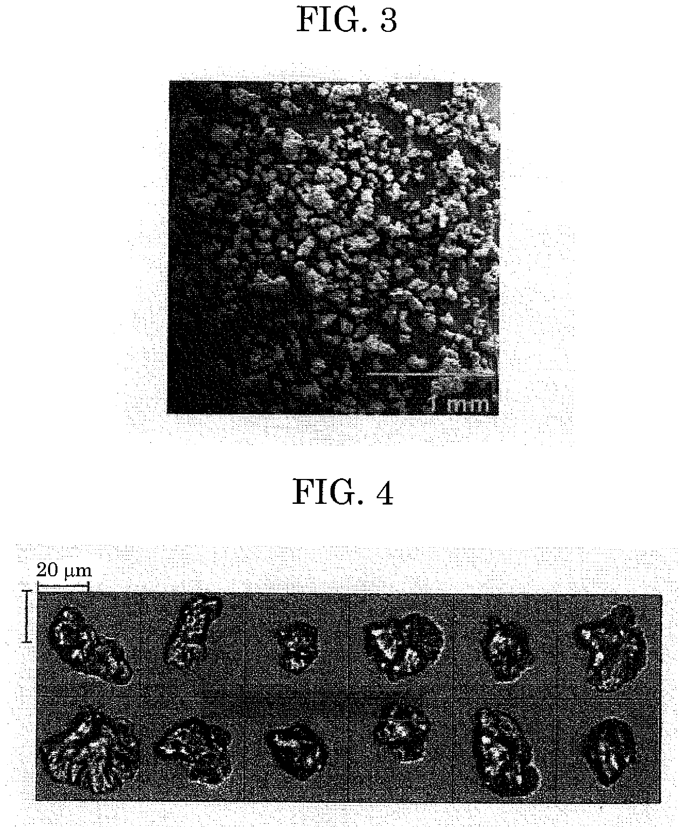

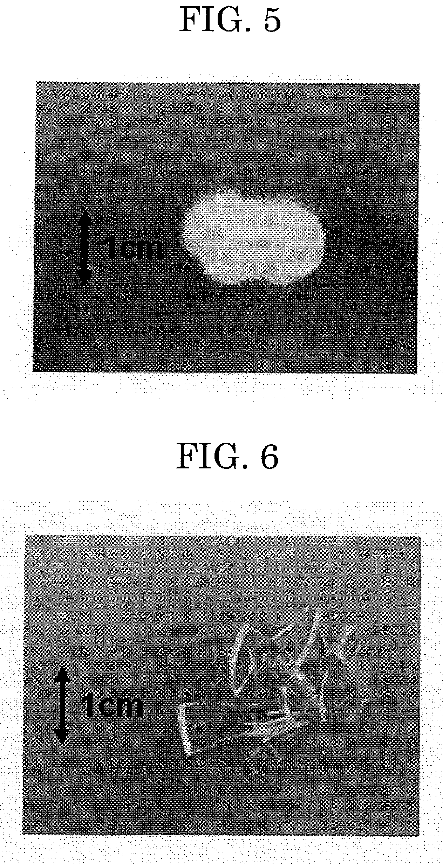

Fig. 3 is an electron microscope image showing the aggregation state of polymer particles 1, which is obtained in the following manner. Fig. 4 is an electron microscope image of each of polymer particles 1. Fig. 5 is an image obtained by photographing polymer particle 1 with a digital camera. As is clear from these images, the produced polymer particles were found to have a size of about 40 µm or less.

Also, with the above method, polymer particles 1 were measured for physical properties (Mn, Mw/Mn, polymer conversion rate), which are shown in Table 2-1.

### < Electron microscopic observation of polymer >

The polymer was observed with a scanning electron microscope or SEM under the following conditions.
Apparatus: JSM-5600 (product of JEOL Ltd.)
Secondary electron image resolution: 3.5 nm
Magnification: ×18 to ×300,000 (136 steps in total)
Applied current: 10⁻¹² A to 10⁻⁸ A
Acceleration voltage: 0.5 kV to 30 kV (53 steps)
Sample holder:
   10 mm (diameter) × 10 mmh sample holder
   32 mm (diameter) × 10 mmh sample holder
Maximum size of sample: 15.24 cm (6 inch) (diameter)
Pixel count: 640 × 480, 1,280 × 960
(Examples 2-2 to 2-24)

The procedure of Example 2-1 was repeated, except that the catalyst used, the type and amount of the surfactant, the type of the monomer and the reaction conditions are changed as shown in the respective columns of Examples 2-2 to 2-24 in Tables 2-1 to 2-4, to thereby obtain polymer particles 2-2 to 2-24. Notably, surfactants 5 to 8 have structures expressed by the following General Formulas.

### Surfactant 5

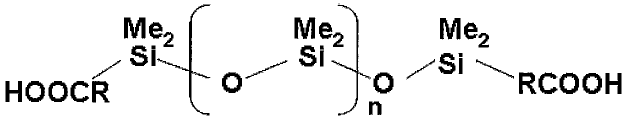

X-22-162C: product of Shin-Etsu Silicones Co.

In Surfactant 5, n is an integer of 1 or greater indicating the number of repeating units.

### Surfactant 6

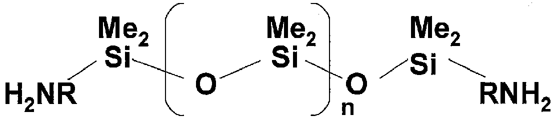

PAM-E: product of Shin-Etsu Silicones Co.

In Surfactant 6, n is an integer of 1 or greater indicating the number of repeating units.

### Surfactant 7

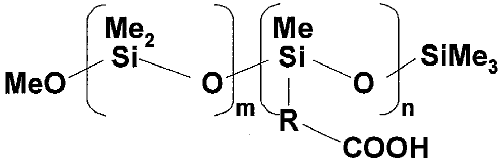

X-22-3701E: product of Shin-Etsu Silicones Co.

In Surfactant 7, each of m and n is an integer of 1 or greater indicating the number of repeating units.

### Surfactant 8

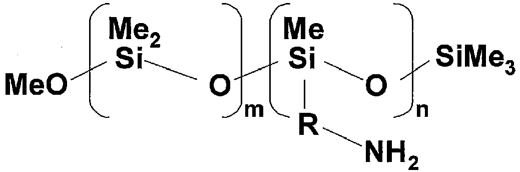

KF-868: product of Shin-Etsu Silicones Co.

In Surfactant 8, each of m and n is an integer of 1 or greater indicating the number of repeating units.

From electron microscope images of the polymer particles photographed in the same manner as in Example 1, the polymer particles were found to be somewhat varied in size but have a similar size to those of Example 1.

Also, with the above method, these polymer particles were measured for physical properties (Mn, Mw/Mn, polymer conversion rate), which are shown in Tables 2-1 to 2-4.

### (Comparative Examples 2-1 and 2-2)

The procedure of Example 2-1 was repeated, except that no surfactant was used, and the type and amount of the monomer were changed as shown in the columns of Comparative Examples 2-1 and 2-2 in Table 2-4 for producing polymer particles. As a result, only aggregated polymer could be obtained.

With the above method, the aggregated polymer was measured for physical properties (Mn, Mw/Mn, polymer conversion rate), which are shown in Table 2-4. Also, Fig. 6 is a photograph of the aggregated polymer of Comparative Example 2-1, which was taken with a digital camera.

**Table 2-1**

| | Ex. 2-1 | Ex. 2-2 | Ex. 2-3 | Ex. 2-4 |
|---|---|---|---|---|
| Catalyst | DMAP | DMAP | DMAP | DMAP |
| Surfactant | 1 | 1 | 1 | 1 |
| Amount of surfactant (parts by mass) | 48.9 | 48.9 | 48.9 | 48.9 |
| Type of monomer | L-lactide | L-lactide (80mol%) | L-lactide (80mol%) | L-lactide (80mol%) |
| | | δ-valerolactone (20mol%) | ε-caprolactone (20mol%) | cyclic carbonate (20mol%) |
| Pressure (MPa) | 8 | 8 | 8 | 8 |
| Temperature (°C) | 60 | 60 | 60 | 60 |
| Number average molecular weight (Mn) | 12000 | 18000 | 20000 | 18000 |
| Molecular weight distribution (Mw/Mn) | 1.3 | 1.1 | 1.4 | 1.3 |
| Polymer conversion rate (mol%) | 96 | 97 | 98 | 96 |

**Table 2-2**

| | Ex. 2-5 | Ex. 2-6 | Ex. 2-7 | Ex. 2-8 | Ex. 2-9 | Ex. 2-10 | Ex. 2-11 | Ex. 2-12 |
|---|---|---|---|---|---|---|---|---|
| Catalyst | DMAP | DMAP | DMAP | DMAP | DMAP | DMAP | DMAP | DMAP |
| Surfactant | 1 | 1 | 1 | 1 | 1 | 1 | 1 | 1 |
| Amount of surfactant (parts by mass) | 48.9 | 48.9 | 48.9 | 48.9 | 48.9 | 48.9 | 48.9 | 48.9 |
| Type of monomer | L-lactide | L-lactide | L-lactide | L-lactide | L-lactide | L-lactide | L-lactide | L-lactide |
| Pressure (MPa) | 8 | 8 | 8 | 8 | 4 | 5 | 10 | 16 |
| Temperature (°C) | 25 | 35 | 80 | 100 | 80 | 60 | 60 | 60 |
| Number average molecular weight (Mn) | 8500 | 7700 | 11000 | 14000 | 7700 | 10000 | 11000 | 13000 |
| Molecular weight distribution (Mw/Mn) | 1.4 | 1.2 | 1.4 | 1.3 | 1.5 | 1.5 | 1.4 | 1.4 |
| Polymer conversion rate (mol%) | 76 | 81 | 92 | 90 | 68 | 86 | 95 | 95 |

**Table 2-3**

| | Ex. 2-13 | Ex. 2-14 | Ex. 2-15 | Ex. 2-16 | Ex. 2-17 | Ex. 2-18 | Ex. 2-19 | Ex. 2-20 |
|---|---|---|---|---|---|---|---|---|
| Catalyst | DABCO | DBU | PPY | DMAP | DMAP | DMAP | DMAP | DMAP |
| Surfactant | 1 | 1 | 1 | 2 | 3 | 4 | 5 | 6 |
| Amount of surfactant (parts by mass) | 48.9 | 48.9 | 48.9 | 72 | 83 | 85 | 87 | 89 |
| Type of monomer | L-lactide | L-lactide | L-lactide | L-lactide | L-lactide | L-lactide | L-lactide | L-lactide |
| Pressure (MPa) | 8 | 8 | 8 | 8 | 8 | 8 | 8 | 8 |
| Temperature (°C) | 60 | 60 | 60 | 60 | 60 | 60 | 60 | 60 |
| Number average molecular weight (Mn) | 12000 | 14000 | 13000 | 20000 | 19000 | 12000 | 13000 | 20000 |
| Molecular weight distribution (Mw/Mn) | 1.5 | 1.4 | 1.4 | 1.2 | 1.3 | 1.4 | 1.3 | 1.2 |
| Polymer conversion rate (mol%) | 94 | 94 | 91 | 88 | 90 | 95 | 91 | 88 |

**Table 2-4**

| | Ex. 2-21 | Ex. 2-22 | Ex. 2-23 | Ex. 2-24 | Comp. Ex. 2-1 | Comp. Ex. 2-2 |
|---|---|---|---|---|---|---|
| Catalyst | DMAP | DMAP | DMAP | DMAP | DMAP | DMAP |
| Surfactant | 7 | 8 | 9 | 10 | - | - |
| Amount of surfactant (parts by mass) | 83 | 84 | 85 | 85 | - | - |
| Type of monomer | L-lactide | L-lactide | L-lactide | L-lactide | L-lactide | L-lactide (80mol%) ε-caprolactone (20mol%) |
| Pressure (MPa) | 8 | 8 | 8 | 8 | 8 | 8 |
| Temperature (°C) | 60 | 60 | 60 | 60 | 60 | 60 |
| Number average molecular weight (Mn) | 19000 | 12000 | 19000 | 12000 | 12000 | 13000 |
| Molecular weight distribution (Mw/Mn) | 1.3 | 1.4 | 1.3 | 1.3 | 1.4 | 1.6 |
| Polymer conversion rate (mol%) | 90 | 95 | 90 | 95 | 92 | 91 |

## Claims

1. A method for producing a polymer, comprising:
polymerizing a ring-opening polymerizable monomer in a compressive fluid with a metal-free organic catalyst to produce a polymer.

2. The method according to claim 1, wherein the polymerizing the ring-opening polymerizable monomer is performed in the presence of a surfactant to produce the polymer in a form of particles.

3. The method according to claim 2, wherein the surfactant has compatibility to both the compressive fluid and the ring-opening polymerizable monomer.

4. The method according to claim 2 or 3, wherein the surfactant has a perfluoroalkyl group, a polydimethylsiloxane group or a polyacrylate group.

5. The method according to any one of claims 1 to 4, wherein a polymer conversion rate of the ring-opening polymerizable monomer is 95 mol% or higher.

6. The method according to any one of claims 1 to 5, wherein the organic catalyst is a nucleophilic nitrogen compound having basicity.

7. The method according to any one of claims 1 to 5, wherein the organic catalyst is a cyclic compound containing a nitrogen atom.

8. The method according to any one of claims 1 to 7, wherein the organic catalyst is any one selected from the group consisting of a cyclic amine, a cyclic diamine, a cyclic diamine compound having an amidine skeleton, a cyclic triamine compound having a guanidine skeleton, a heterocyclic aromatic organic compound containing a nitrogen atom and an N-heterocyclic carbene.

9. The method according to claim 8, wherein the organic catalyst is any one selected from the group consisting of 1,4-diazabicyclo-[2.2.2]octane, 1,8-diazabicyclo[5.4.0]undec-7-ene, 1,5,7-triazabicyclo[4.4.0]dec-5-ene, diphenylguanidine, N,N-dimethyl-4-aminopyridine, 4-pyrrolidinopyridine and 1,3-di-tert-butylimidazol-2-ylidene.

10. The method according to any one of claims 1 to 9, wherein the ring-opening polymerizable monomer is a monomer having an ester bond in a ring thereof.

11. The method according to claim 10, wherein the monomer having the ester bond in the ring thereof is a cyclic ester or a cyclic carbonate.

12. The method according to any one of claims 1 to 11, wherein the ring-opening polymerizable monomer is a lactide of L-form lactic acids, a lactide of D-form lactic acids, or a lactide of an L-form lactic acid and a D-form lactic acid.

13. The method according to any one of claims 1 to 12, wherein the compressive fluid is formed of carbon dioxide.

## Patentansprüche

1. Verfahren zur Herstellung eines Polymers, umfassend:
das Polymerisieren eines ringöffnenden polymerisierbaren Monomers in einem Druckfluid mit einem metallfreien organischen Katalysator, um ein Polymer herzustellen.

2. Verfahren nach Anspruch 1, wobei das Polymerisieren des ringöffnenden polymerisierbaren Monomers in Anwesenheit eines Tensids durchgeführt wird, um das Polymer in Form von Teilchen zu erzeugen.

3. Verfahren nach Anspruch 2, wobei das Tensid sowohl mit dem Druckfluid als auch mit dem ringöffnenden polymerisierbaren Monomer Kompatibilität aufweist.

4. Verfahren nach Anspruch 2 oder 3, wobei das Tensid eine PerfluoralkylGruppe, eine Polydimethylsiloxan-Gruppe oder eine Polyacrylat-Gruppe aufweist.

5. Verfahren nach irgendeinem der Ansprüche 1 bis 4, wobei die Polymer-Umsatzrate des ringöffnenden polymerisierbaren Monomers 95 mol-% oder mehr beträgt.

6. Verfahren nach irgendeinem der Ansprüche 1 bis 5, wobei der organische Katalysator eine nucleophile Stickstoffverbindung ist, die Basizität aufweist.

7. Verfahren nach irgendeinem der Ansprüche 1 bis 5, wobei der organische Katalysator eine cyclische Verbindung ist, die ein Stickstoffatom enthält.

8. Verfahren nach irgendeinem der Ansprüche 1 bis 7, wobei der organische Katalysator irgendeiner ausgewählt aus der Gruppe bestehend aus einem cyclischen Amin, einem cyclischen Diamin, einer cyclischen Diaminverbindung mit einem Amidingerüst, einer cyclischen Triaminverbindung mit einem Guanidingerüst, einer heterocyclischen aromatischen organischen Verbindung enthaltend ein Stickstoffatom und einem N-heterocyclischen Carben ist.

9. Verfahren nach Anspruch 8, wobei der organische Katalysator irgendeiner ausgewählt aus der Gruppe bestehend aus 1,4-Diazabicyclo-[2.2.2]octan, 1,8-Diazabicyclo[5.4.0]undec-7-en, 1,5,7-Triazabicyclo[4.4.0]dec-5-en, Diphenylguanidin, N,N-Dimethyl-4-aminopyridin, 4-Pyrrolidinopyridin und 1,3-Di-tert.-butylimidazol-2-yliden ist.

10. Verfahren nach irgendeinem der Ansprüche 1 bis 9, wobei das ringöffnende polymerisierbare Monomer ein Monomer mit einer Esterbindung in einem Ring davon ist.

11. Verfahren nach Anspruch 10, wobei das Monomer mit der Esterbindung in dem Ring davon ein cyclischer Ester oder ein cyclisches Carbonat ist.

12. Verfahren nach irgendeinem der Ansprüche 1 bis 11, wobei das ringöffnende polymerisierbare Monomer ein Lactid von L-Form-Milchsäuren, ein Lactid von D-Form-Milchsäuren oder ein Lactid von einer L-Form-Milchsäure und einer D-Form-Milchsäure ist.

13. Verfahren nach irgendeinem der Ansprüche 1 bis 12, wobei das Druckfluid aus Kohlendioxid gebildet wird.

## Revendications

1. Procédé de production d'un polymère, comprenant :
la polymérisation d'un monomère polymérisable par ouverture de cycle dans un fluide sous compression avec un catalyseur organique exempt de métal pour produire un polymère.

2. Procédé selon la revendication 1, dans lequel la polymérisation du monomère polymérisable par ouverture de cycle est réalisée en présence d'un tensio-actif pour produire le polymère dans une forme de particules.

3. Procédé selon la revendication 2, dans lequel le tensio-actif présente une compatibilité à la fois pour le fluide sous compression et le monomère polymérisable par ouverture de cycle.

4. Procédé selon la revendication 2 ou 3, dans lequel le tensio-actif présente un groupe perfluoroalkyle, un groupe polydiméthylsiloxane ou un groupe polyacrylate.

5. Procédé selon l'une quelconque des revendications 1 à 4, dans lequel un taux de conversion de polymère du monomère polymérisable par ouverture de cycle est de 95 % en mole ou supérieur.

6. Procédé selon l'une quelconque des revendications 1 à 5, dans lequel le catalyseur organique est un composé d'azote nucléophile ayant une basicité.

7. Procédé selon l'une quelconque des revendications 1 à 5, dans lequel le catalyseur organique est un composé cyclique contenant un atome d'azote.

8. Procédé selon l'une quelconque des revendications 1 à 7, dans lequel le catalyseur organique est l'un quelconque choisi dans le groupe constitué d'une amine cyclique, d'une diamine cyclique, d'un composé de diamine cyclique ayant un squelette amidine, d'un composé de triamine cyclique ayant un squelette guanidine, d'un composé organique aromatique hétérocyclique contenant un atome d'azote et d'un carbène N-hétérocyclique.

9. Procédé selon la revendication 8, dans lequel le catalyseur organique est l'un quelconque choisi dans le groupe constitué de 1,4-diazabicyclo-[2.2.2]octane, 1,8-diazabicyclo[5.4.0]undéc-7-ène, 1,5,7-triazabicyclo-[4.4.0]déc-5-ène, diphénylguanidine, N,N-diméthyl-4-aminopyridine, 4-pyrrolidinopyridine et 1,3-di-tert-butylimidazol-2-ylidène.

10. Procédé selon l'une quelconque des revendications 1 à 9, dans lequel le monomère polymérisable par ouverture de cycle est un monomère ayant une liaison ester dans un cycle de celui-ci.

11. Procédé selon la revendication 10, dans lequel le monomère ayant la liaison ester dans le cycle de celui-ci est un ester cyclique ou un carbonate cyclique.

12. Procédé selon l'une quelconque des revendications 1 à 11, dans lequel le monomère polymérisable par ouverture de cycle est un lactide d'acides lactiques de forme L, un lactide d'acides lactiques de forme D, ou un lactide d'un acide lactique de forme L et d'un acide lactique de forme D.

13. Procédé selon l'une quelconque des revendications 1 à 12, dans lequel le fluide sous compression est constitué de dioxyde de carbone.
